# EUROPEAN PATENT APPLICATION

(11) **EP 1 581 008 A2**
(43) Date of publication of application: **28.09.2005**
(21) Application number: 05090074.5
(22) Date of filing: 24.03.2005
(51) Int. Cl.: H04N 7/26

(54) **Parallel processing of an image and its corresponding thumbnail**

(30) Priority: 25.03.2004 JP 2004089749
(71) Applicant: NEC CORPORATION, Tokyo 108-01 (JP)
(72) Inventor: Nagashima, Noriaki, Kakegawa-shi Shizuoka (JP)
(74) Representative: Wenzel & Kalkoff

(57) **Abstract**

An image processing device creates JPEG compressed image data from an uncompressed still input image. A number of pixels of the input image is converted to a predetermined number of pixels of a reduced image to be obtained by reducing the input image in size. The uncompressed image data of the input image and reduced image data of the reduced image are JPEG-compressed to output JFEG-compressed image data of the input image and the reduced image.

## Description

The present invention relates to an image processing technology and, more particularly, to a device and a method for creating image data including primary or main image data and reduced image data from uncompressed image data.

In digital cameras and mobile camera-equipped telephones, an image pickup device with over one million pixels has come in general use. In many cases, an image with such a large number of pixels is recorded after compressed in JPEG (Joint Photographic Experts Group) format. Although this JPEG format advantageously requires a smaller amount of memory for storing image data, large amounts of computations are required for encoding/decoding. Therefore, JPEG-format receding has a disadvantage that the amount of computations and the processing time increase in either case of using software or hardware. For this reason, the DCF (Design rule for Camera File system) format and the like are widely used as a recording file. According to such a type of recording file, compressed data, which is a reduced version of a primary image, is stored together with the primary image data to achieve high-speed searching and browsing after recording.

In ordinary JPEG encoding/decoding processes, the encoding process includes DCT (Discrete Cosine Transform), quantization and Huffman encoding. The decoding process includes Huffman decoding, dequantization and inverse-DCT (IDCT).

In the encoding process, input uncompressed image data is compressed by DCT transformation, and the compressed image data is quantized and further Huffman-encoded. Thus, the resultant data is outputted as JPEG data. (For example, see Japanese Patent Application Unexamined Publication Nos. 2000-032462 and 2000-059612.)

More specifically, assuming that an original image is composed of M x N pixels, the original image data is first divided into unit blocks each composed of a given number of pixels (normally, 8 x 8 pixels). Image data of each block is transformed into 64 frequency components (8 x 8 components in horizontal and vertical directions respectively), called DCT coefficients. Among these DCT coefficients, a DC component (one of the 64 coefficients) is quantized, and thereafter, a difference between this quantized value and a quantized value of the DC component of the immediately preceding block is Huffman-encoded. On the other hand, AC components (64 - 1) of the DCT coefficients are quantized, zigzag-scanned, and then Huffman-encoded.

The reason for different processing for the DC component and the AC components is that the characteristic of each type of component is taken into consideration. To be more specific, the DC component corresponds to the average value of the 8 x 8 pixel block and has a characteristic that the average value varies little from those of the neighboring blocks. Therefore, a difference between the DC coefficients of the blocks in a straight line is Huffman-encoded.

The Huffman-encoded Dc components and AC components are multiplexed together with information such as information about a quantization table, an encoding table and the like used in the processing up to the encoding processing, information about the pixel size of the original image, and appended information for constituting a file, and thus outputted as JPEG image stream data.

The decoding process inversely follows the above-described encoding process. Specifically, Huffman codes of JPEG image stream data inputted are decoded, and the DC component of each block is reproduced by adding the already obtained value of the DC component of the immediately preceding block to the value of a DC difference obtained from the block in question. The DC components thus obtained and the AC components are inversely quantized, inversely DCT-transformed, and outputted as block decompressed image data.

There have also been proposed some methods for generating a reduced image. For example, Japanese Patent Application Unexamined Publication No. 2003-069631 discloses an image processing device which divides original image data into 32 x 32 pixel tiles and creates a thumbnail by using the DC component of the DCT coefficients generated during JPEG compression of the original image.

Moreover, Japanese Patent Application Unexamined Publication No. 2002-218373 discloses an image processing device and an electronic camera which stores a DCF-thumbnail image into a memory while JPEG-compressing a main image and, after completing the compression of the main image, compresses the thumbnail image, thereby creating a compressed file of the main image and the thumbnail image.

Additionally, digital cameras and camera-equipped mobile telephones are configured such that a user can select an image size when photographing and recording an image. Moreover, there has been proposed a technique of performing high-speed processing for some specific image size. In the case of a plurality of image sizes without any specific image size, it is considered that a compressed primary image is completely decoded and thereafter subjected to resizing and sampling ratio conversion. Then, the resultant resized data is compressed, thus obtaining compressed data of a reduced version of the primary image.

According to the encoding/decoding processes of the above-described prior arts, the amount of processing in each process is increased proportionately with the number of pixels of image data, resulting in a large amount of processing time. Moreover, in the case where the same goes for the above-mentioned resizing and sampling ratio conversion, there is a disadvantage that the waiting time from photographing until the completion of recording will be long.

Furthermore, while a trend is a growing number of pixels of an image pickup device, proposals are made for high-speed processing in part, such as the above-described conventional image processing technology. However, the prior arts do not consider parallel processing, and many of them are uniformalized techniques. Therefore, the prior arts cannot deal with various numbers of pixels, resulting in an unnecessarily increased scale of hardware and in an increased amount of processing time.

According to the present invention, it is possible to deal with multiple numbers of pixels and to suppress an increase in the amount of processing.

According to the present invention, it is possible to reduce the waiting time from photographing until the completion of recording and to suppress the power consumption of a device.

According to the present invention, an image processing device for creating compressed image data from uncompressed image data of an input image, includes: a converter for converting a number of pixels of the input image to a predetermined number of pixels of a reduced image to be obtained by reducing the input image in size; a compression section for compressing image data to produce compressed image data; and a controller controlling such that the compression section compresses the uncompressed image data of the input image and reduced image data of the reduced image to output compressed image data of the input image and the reduced image.

The converter may include an image memory for storing an image to be converted to the predetermined number of pixels of the reduced image, wherein the controller selects one of the reduced image and an intermediate image as a stored image to store it into the image memory, depending on the number of pixels of the input image and its aspect ratio, wherein the intermediate image is a reduced image that is intermediately obtained in a compression process of the input image.

The compression process performed by the compression section preferably conforms to JPEG (Joint Photographic Experts Group) format. In this case, the compression section preferably includes: a DCT section for performing DCT (discrete cosine transform) of image data to be compressed, to produce DCT components, a quantizer for quantizing the DCT components to produce quantized DCT components; an encoder for encoding the quantized DCT components according to entropy encoding to produce compressed image data; and a combiner for combining compressed image data of the input image and compressed image data of the reduced image into a file of the compressed image data of the input image and the reduced image.

The intermediate image to be stored in the image memory may be composed of DC components of the DCT components.

The image processing device may further include an input converter for converting the input image into a color space and a sampling ratio suitable for JPEG compression to selectively output converted input image to the converter and the compression section.

The converter may further include a resizer for resizing a selected one of the input image and the stored image of the image memory into a predetermined size of the reduced image. The converter may further include a sampling ratio converter for converting a selected one of the input image and the stored image of the image memory into a predetermined sampling ratio suitable for JPEG compression. The converter may further include a filling section for filling a missing area where no pixels exist to make an aspect ratio of the reduced image match that of the input image, wherein the missing area is generated when the input image and the reduced image have different aspect ratios. The converter may crop a peripheral portion of the input image in its vertical and horizontal directions by suitably adjusting a scaling factor without activating the filling section.

When an aspect ratio of the input image is equal to that of the reduced image and the number of the input image is substantially smaller than a predetermined reference value, the controller may select the reduced image obtained by resizing the input image to store it into the image memory.

When an aspect ratio of the input image is equal to that of the reduced image and the number of the input image is a little smaller than a predetermined reference value, the controller may select the DC components of the DCT components as the intermediate image to store it into the image memory, wherein the DC components of the intermediate image are outputted to the compression section after converting the intermediate image to the predetermined number of pixels.

When an aspect ratio of the input image is equal to that of the reduced image and the number of the input image is not smaller than a predetermined reference value, the controller may select the DC components of the DCT components as the intermediate image to store it into the image memory, wherein the DC components of the intermediate image are outputted to the compression section without converting the intermediate image.

The image processing device may further includes : a resizer for resizing the input image to a resized image; a selector for selecting one of the image data stored in the image memory, image data converted by the converter from the image data stored in the image memory, and image data of the resized image; an adjuster for adjusting image data selected by the selector to produce display-suitable image data; and a display for displaying display-suitable image data. The adjuster may include a color reduction section for reducing the selected image data in color.

The adjuster may include a display memory for storing the display-suitable image data, which is further used as source data of the reduced image.

The image processing device may further include: an input section for inputting compressed image data from outside; a decompression section for decompressing the compressed image data inputted from outside to output a decompressed image to the resizer so as to display it.

The decompression section may include: an entropy decoder for decoding the compressed image data inputted from outside to produce DCT components) a dequantizer for dequantizing the DCT components to produce dequantized DCT components; and an inverse DCT section for performing inverse-DCT of the dequantized DCT components to produce the decompressed image.

The image processing device may further include a selective dequantizer for dequantizing DC components of the DCT components obtained by the entropy decoder to output dequantized DC components to the converter so as to produce a reduced image of the decompressed image.

According to the present invention, a portable communication device equipped with a digital camera, includes the image processing device as described above and the digital camera outputs the input image.

According to another aspect of the present invention, an image processing method comprises: converting a number of pixels of the input image to a predetermined number of pixels of a reduced image to be obtained by reducing the input image in size; compressing the uncompressed image data of the input image and reduced image data of the reduced image; and outputting compressed image data of the input image and the reduced image.

The converting step may include: storing an image to be converted to the predetermined number of pixels of the reduced image into an image memory; and selecting one of the reduced image and an intermediate image as a stored image to store it into the image memory, depending on the number of pixels of the input image and its aspect ratio, wherein the intermediate image is a reduced image that is intermediately obtained in a compression process of the input image.

The compression process conforms to JPEG (Joint Photographic Experts Group) format, wherein the compressing step comprises: performing DCT (discrete cosine transform) of image data to be compressed, to produce DCT components; quantizing the DCT components to produce quantized DCT components; encoding the quantized DCT components according to entropy encoding to produce compressed image data; and combining compressed image data of the input image and compressed image data of the reduced image into a file of the compressed image data of the input image and the reduced image.

As described above, according to the present invention, the number of pixels of an image is changed into a given number of pixels by size conversion. Therefore, in image photographing using a digital camera, a camera-equipped mobile telephone or the like, it is possible to perform recording processing at high speed, irrespective of an image size selected by a user. Accordingly, it is possible to reduce the waiting time until the next photographing, leading to the achievement of operation comfort and the suppression of power consumption.
FIG. 1 is a block diagram of an image processing device according to a first embodiment of the present invention;
FIG. 2 is a block diagram of an image processing device according to an example of the first embodiment;
FIG. 3 is a flowchart showing general operations of the first embodiment;
FIG. 4A is a flowchart showing operations in CASE-1 in FIG. 3;
FIG. 4B is a flowchart showing operations in CASE-2 in FIG. 3;
FIG. 4C is a flowchart showing operations in CASE-5 in FIG. 3;
FIG. 5 is a block diagram of an image processing device according to a first example of a second embodiment of the present invention;
FIG. 6 is a block diagram of an image processing device according to a second example of the second embodiment of the present invention;
FIG. 7 is a block diagram of an image processing device according to a third embodiment of the present invention; and
FIG. 8 is a schematic block diagram of a mobile telephone with a camera using the image processing device according to the present invention.

### 1. First Embodiment

### 1.1) Configuration

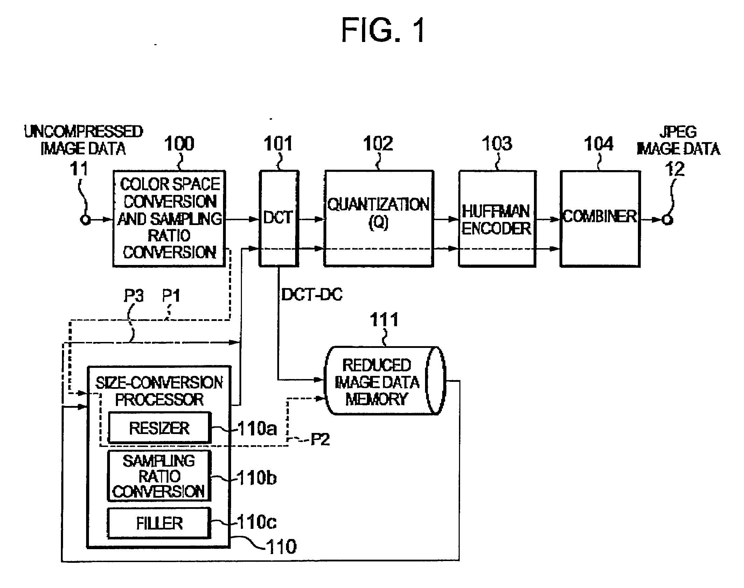

FIG. 1 shows filing means used when uncompressed image data having no reduced image data is provided. Incidentally, in FIG. 1, a broken line and a one-dot chain line between blocks individually indicate selective processing paths such as a processing bypass, and a broken line inside a block is given for easy understanding of an output path and the like taken when the block is used.

As shown in FIG. 1, an image processing device according to a first embodiment of the present invention inputs uncompressed image data 11 and, through image processing, which will be described later, outputs a file of JPEG image data 12 including JPEG data of a primary (or main) image and JPEG data of its reduced image. This image processing device includes a color space conversion and sampling ratio conversion section 100, a DCT section 101, a quantization section 102, a Huffman encoder 103, a combiner 104, a size-conversion processor 110, and a reduced image data memory 111. The size-conversion processor 110 implements each of the functions of a resizer 110a, a sampling ratio converter 110b and a filler 110c. Processing bypasses P1 to P3, indicated by the broken and one-dot chain lines in FIG. 1, and processing paths, indicated by the solid lines in FIG. 1, can be controlled by software as will be described later. Next, the function of each block will be described briefly.

### Conversion of Color Space and Sampling Ratio

The color space conversion and sampling ratio conversion section 100 has an input data conversion function. The color space conversion and sampling ratio conversion section 100 converts the uncompressed image data 11 inputted from an image pickup device such as CCD or CMOS image sensor, into data having a color space and a sampling ratio that are suitable for JPEG system.

Since the image pickup device generally employs an RGB primary color filter or a complementary color filter, the image pickup device first produces an image signal of a color space according to the used filter. In JPEG, however, compression processing is performed using a color space called Y-Cb-Cr, defined by luminance (Y) and chrominance (Cb, Cr) . Therefore, if the image pickup device and its built-in control circuit do not perform color space conversion, it is required, as preprocessing, to convert the color space into the YCbCr color space. In addition, in JPEG, compression is performed in many cases after the number of Cb chrominance components and the number of Cr chrominance components are reduced with reference to the luminance components of four pixels. This ratio between the numbers of components to be extracted from each information element of the original image information is called a sampling ratio, and a sampling ratio of 4-Z:Z is specified for a reduced image complying with the DCF standard. As an aside, this DCF standard is JEITA CP-3461 (Design rule for Camera File System) included in JEIDA standards.

In general, for a primary image of image data, a sampling ratio of chrominance to luminance is 1/2 both in the horizontal and vertical directions. Therefore, when the sampling ratio is not a desired one even if the color space conversion has been performed on the image pickup device side, sampling ratio conversion is required as preprocessing. Some image processing devices may be equipped with a plurality of different types of image pickup devices. Although not clearly shown here, it is assumed that the color space conversion function and the sampling ratio conversion function can be controlled independently of each other and that one of them or both of them can be bypassed.

### JPEG Encoding

The configuration from the DCT section 101 to the Huffman encoder 103 in FIG. 1 is substantially the same as a general configuration for conventional JPEG encoding. The data JPEG-encodod through this part is sent to the combiner 104, where filing of the data for recording is performed.

The DCT section 101 not only has a general function of executing 8 x 8 DCT operation in JPEG but also a function of extracting DC components from a result of the 8 x 8 DCT computation to store the extracted DC components in the reduced image data memory 111 under the control by a controller (not shown). This DC component to be extracted will be referred to as a DCT-DC component, and this function will be referred to as DCT-DC extraction.

The 8 x 8 DCT processing is employed in the JPEG standard, which performs discrete cosine transform on an block of 8 x 8 pixels. This transform also results in an 8 x 8 matrix, and a DCT coefficient at the first row and first column is called DC component. The DC component has such a characteristic that it is the average value of all the components in the block before conversion.

The JPEG compression section from the DCT section 101 to the Huffman encoder 103 is not only for a primary image but also for a reduced image. However, when JPEG-compressing the reduced image, it is not required to operate the DCT-DC extraction function of the DCT section 101. The DCT-DC extraction function of the DCT section 101 is operated as needed when the primary image is JPEG-compressed as will be described later. The extracted DCT-DC components are stored in the reduced image data memory 111. Due to the characteristics of the DCT computation, this reduced image data is obtained by reducing the original image data by 1/8 in each of the horizontal and vertical directions.

### Size Conversion

The size-conversion processor 110 has functions of the resizer 110a, the sampling ratio converter 110b and the filler 110c, which each perform resizing, sampling ratio conversion and filler insertion on data received from the color space conversion and sampling ratio conversion section 100 or data stored in the reduced image data memory 111.
The size-conversion processor 110 is configured such that the functions can be individually executed when needed. The size-conversion processor 110 is bypassed as indicated by the one-dot chain line in FIG. 1 when none of the functions need to be executed.

### a) Resizer 110a

In the DCF thumbnail format, a reduced image is limited to 160 x 120 pixels. In addition, the size of a reduced image is generally uniformalized for each apparatus. Therefore, if the data inputted from the color space conversion and sampling ratio conversion section 100 or the data stored in the reduced image data memory 111 is not of a given size, the size of the input image is changed into the given size by the resizer 110a.

### b) Sampling Ratio Converter 110b

As described earlier, the primary image and the reduced image do not always have the same chrominance-luminance sampling ratio. Therefore, the sampling ratio converter 110b converts the sampling ratio for the input data into a given sampling ratio. In the case where the resizing and the sampling ratio conversion are both performed, sampling ratio conversion can be equivalently performed by resizing an input image using different scaling ratios between luminance and chrominance.

### c) Filler 110c

When the primary image and the reduced image have different width-to-height ratios with respect to the number of pixels, the filler 110c is used to fill a missing area while maintaining the aspect ratio. That is, since data shortage occurs in the reduced image in the vertical or horizontal direction, the filler 110c has a function of filling the part where the data shortage has occurred with adequate data. Accordingly, the filler function is not required when the primary image and the reduced image have the same width-to-height ratio with respect to the number of pixels, or when the occurrence of a missing area in the reduced image is permissible, or when little importance is placed on the maintenance of the aspect ratio.

### Combiner

The combiner 104 has a function of combining the JPEG-compressed primary image with the JPEG-compressed reduced image and affixing information required for filing.

Note that, for the blocks 101 to 104 each representing the above-mentioned functions, it is required to set up, as typical examples, the number of pixels, the sampling ratio, a quantization table, a Huffman table, photographic information, and the like. Since the setups are made as in the case of a conventional circuit, the description thereof will be omitted.

According to this embodiment, as will be described below, it is possible to adaptively select effective means depending on the number N_{IN} of pixels of the uncompressed data 11 inputted, and thereby to create the compressed data of the reduced image as a file. Therefore, in image processing performed in a digital camera or a mobile telephone terminal equipped with a camera, the recording of an image can be completed at high speed, irrespective of an image size selected by a user. Accordingly, the waiting time until the next photographing operation will be reduced, leading to the achievement of operation comfort and the suppression of power consumption.

### 1.2) Example

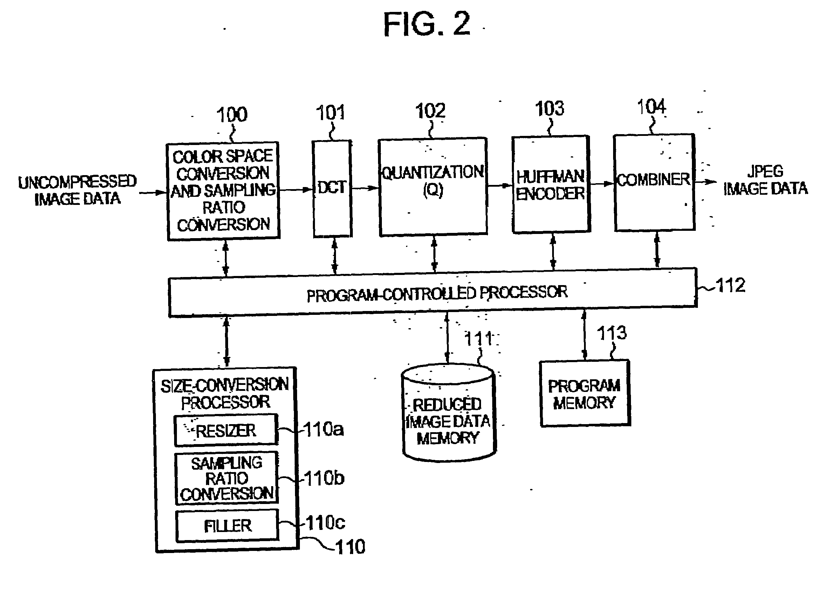

As shown in FIG. 2, the above-described operation control of the image processing device can be performed by running necessary control programs on a program-controlled processor 112 such as a CPU. The program-controlled processor 112 executes image processing operations, which will be described below in detail, by reading and executing the corresponding control programs stored on a program memory 113. Note that, in FIG. 2, the same reference numerals and symbols are given to blocks having the same functions as the above-described blocks in FIG. 1 and the descriptions thereof will be omitted. Accordingly, in the image processing device shown in FIG. 2 as well, it is possible to adaptively select effective means depending on the number N_{IN} of pixels of the uncompressed image data 11 inputted, and thereby to create the compressed data of the reduced image as a file.

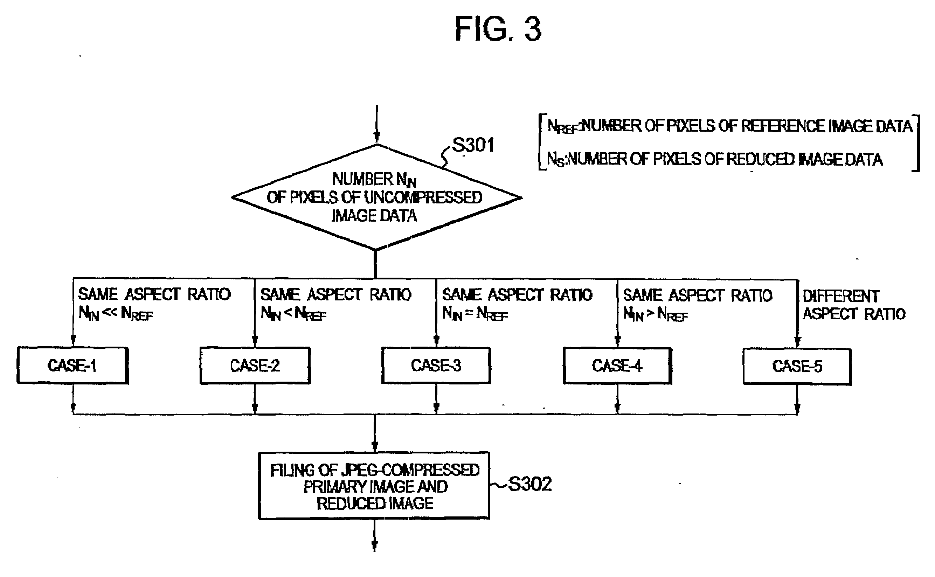

The number N_{IN} of pixels of the uncompressed image data 11 is known when the filing is performed. Therefore, in this example, an image obtained by magnifying a desired reduced image (with the number N_{B} of pixels) by eight times both in the vertical and horizontal directions, is assigned as a reference image (with the number N_{REF} of pixels), and this reference number N_{REF} of pixels is compared with the number N_{IN} of pixels of the input image. Depending on a result of this comparison, the image processing operations are branched off to any one of CASE-1 to CASE-5, as shown in FIG. 3.

It is assumed here, as an example, that the number Nᵤ of pixels of the reduced image is 160 x 120 pixels in DCF thumbnail format and that the reference number N_{REF} of pixels is 1280 x 960 pixels, obtained by multiplying 160 x 120 pixels by 8 in the vertical and horizontal directions respectively.

### (CASE-1)

Referring to FIG. 3, the operation in CASE-1 is selected when the aspect ratio of the input image is the same as the aspect ratio of the reduced image and the number N_{IN} of pixels of the input image is much smaller than the reference number N_{REF} of pixels (1280 x 960). For example, this applies to the case where the number N_{IN} of pixels of the input image is 640 x 480, as in the case of VGA (Video Graphics Adapter).

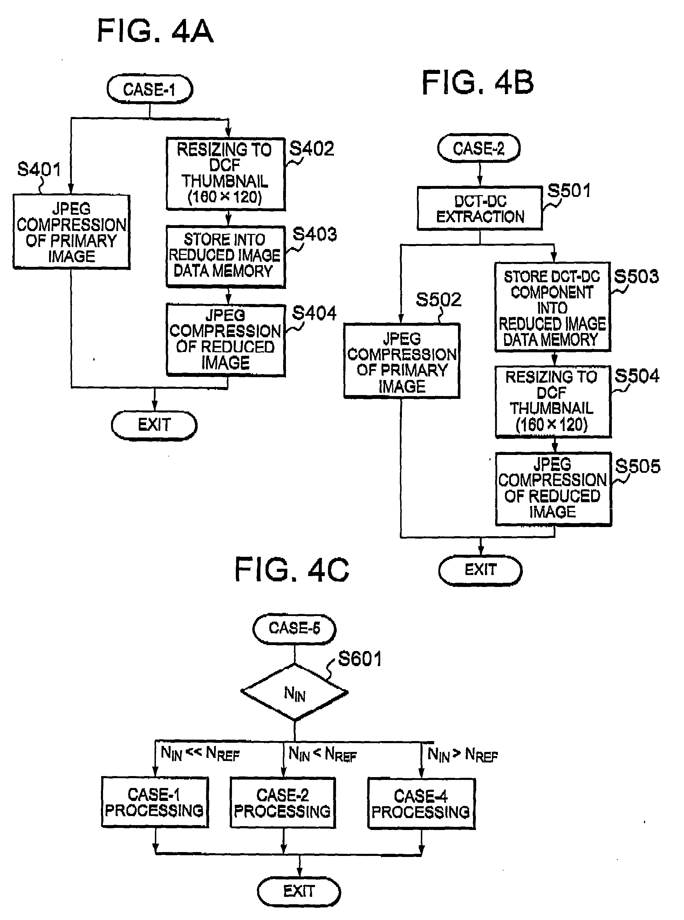

In CASE-1, as shown in FIG. 4A, the primary image is JPEG-compressed through the DCT section 101 to the Huffman encoder 103 in FIG. 2 and then outputted to the combiner 104 (Step S401). At this time, the DCT-DC extraction function of the DCT section 101 is not used.

In parallel with the JPEG compression of the primary image, the color space conversion and sampling ratio conversion section 100 outputs the data to the size-conversion processor 110, where the resizer 110a resizes the data to the given reduced image of 160 x 120 pixels (Step S402). Specifically, if the input image is of VGA, the input image is reduced by 1/4 both in the vertical and horizontal directions. The reduced image thus resized is stored in the reduced image data memory 111 (Step S403). In the size-conversion processor 110, sampling ratio conversion can be performed by the sampling ratio converter 110b if needed.

steps S402 and S403 correspond to paths P1 and P2 indicated by the broken lines in FIG. 1, respectively. The reduced image data stored in the reduced image data memory 111 bypasses the size-conversion processor 110 (P3 in FIG. 1), is JPEG-compressed through the DCT section 101 to the Huffman encoder 103 (Step S404), and is outputted to the combiner 104. Then, the combiner 104 performs filing suitable to record the JPEG-compressed data of the primary image, the JPEG-compressed data of the reduced image and other required information (Step S302).

### (CASE-2)

In FIG. 3, the operation in CASE-2 is selected when the aspect ratio of the input image is the same as the aspect ratio of the reduced image and the number N_{IN} of pixels of the input image is a little smaller than the reference number N_{REF} of pixels (1280 x 960). For example, this applies to the case where the number N_{IN} of pixels of the input image = 1024 x 768.

In CASE-2, as shown in FIG. 4B, the DCT-OC extraction function of the DCT section 101 is activated, thus extracting the DC components of the DCT coefficients (Step S501). For the primary image, after this DCT-DC extraction, the above-described JPEG compression is performed through the DCT section 101 to the Huffman encoder 103, and then the JPEG-compressed data is outputted to the combiner 104 (Step S502).

In parallel with the JPEG compression of the primary image, the DCT-DC components extracted by the DCT section 101 are stored in the reduced image data memory 111 (Step S503). When the number N_{IN} of pixels of the input image is equal to 1024 x 768, the number of pixels of the reduced image stored is 128 x 96. Since the number of pixels of the given reduced image is 160 x 120, the 128 x 96 pixel image data stored in the reduced image data memory 111 needs to be enlarged to this given image size. Therefore, the size-conversion processor 110 receives an input of the 128 x 96 pixel image data from the reduced image data memory 111 and enlargingly resizes it to the given image size 160 x 120 (Step S504). In other words, when the number N_{IN} of pixels of the input image is equal to 1024 x 768, the reduced image data is made 1.25 times larger. Note that sampling ratio conversion is performed if needed.

The reduced image data thus enlarged to the given image size 160 x 120 is outputted to the DCT section 101 and JPEG-compressed through the DCT section 101 to the Huffman encoder 103 as described above (Step S505). The combiner 104 performs filing suitable to record the JPEG-compressed data of the primary image, the JPEG-compressed data of the reduced image and other required information (Step S302).

### (CASE-3)

In FIG. 3, the operation in CASE-3 is selected when the aspect ratio of the input image is the same as the aspect ratio of the reduced image and the number N_{IN} of pixels of the input image is equal to the reference number N_{REF} of pixels (1280 x 960) .

Although the operation in CASE-3 is similar to that in CASE-2, the size-conversion processor 110 does not perform resizing in CASE-3. Therefore, Step S504 in FIG. 4B is not required. If sampling ratio conversion is not required either, the size-conversion processor 110 is bypassed (the path P3 indicated by the one-dot chain line in FIG. 1).

### (CASE-4)

In FIG. 3, the operation in CASE-4 is selected when the aspect ratio of the input image is the same as the aspect ratio of the reduced image and the number N_{IN} of pixels of the input image is larger than the reference number N_{REF} of pixels (1280 x 960).

Although the operation in CASE-4 is similar to that in CASE-2, the size-conversion processor 110 does not perform resizing in CASE-4. If sampling ratio conversion is unrequired either, the size-conversion processor 110 is bypassed (the path P3 indicated by the one-dot chain line in FIG. 1). However, when the number N_{IN} of pixels of the input image is slightly larger than the reference number N_{REF} of pixels (1280 x 960) and the peripheral pixels do not need to be included in the reduced image, the same processing as in CASE-3 is performed.

### (CASE-5)

In FIG. 3, the operation in CASE-5 is selected when the aspect ratio of the input image is different from the aspect ratio of the reduced image.

For the operation in CASE-5, one of the procedures in CASE-1, CASE-2 and CASE-4 as described above is selected depending on the result of the comparison between the number N_{IN} of pixels of the input image and the reference number N_{REF} of pixels (1280 x 960). In the size-conversion processor 110, the function of the filler 110c can be made effective. Alternatively, if the cropping of the peripheral portion of an input image in the vertical and the horizontal directions is permissible, it can be selected that the filler function is not used by suitably adjusting a scaling factor.

As described hereinabove, whatever the number N_{IN} of pixels of an input image may be, this embodiment can deal with the input image by switching and setting the internal circuit blocks. More specifically, at a stage where the number of pixels of an image to be inputted is known, it is possible to input an image with a different number of pixels only by setting a processing path in the circuit in the image processing device and by setting a conversion ratio for the number of pixels.

Additionally, in the image processing device according to this embodiment, multiple numbers of pixels can be selected for a primary image when image data from a digital camera is inputted, for example. Moreover, the primary image and its reduced image can be filed and recorded electronically on a recording medium such as a memory, in JPEG format conforming to, for example, DCF specification part in Digital Still Camera Image File Format Standard (Exchangeable image file format for Digital Still Camera: Exif).

According to this embodiment, CDT-DC components extracted in the process of primary-image compression are held. Then, it is possible to resize the DCT-DC components as needed, to convert the chrominance and luminance sampling ratio for the DCT-DC components as needed, to add a filler when the vertical-horizontal pixel number ratio is not a desired one, and/or to perform cropping. The image data that has been converted to have a desired number of pixels is JPEG-compressed and then filed together with the compressed primary data and appended information relevant to the filing standard.

In addition, the number of pixels of the primary image can be changed by controlling the input image generating side such as a camera. The input number of pixels can be changed also by installing a resizing engine (software or hardware) at an input stage. The number of pixels can be resized by magnifying/reducing the input image and/or by cropping part of the input image.

In the case where the number of pixels of the primary data is not large, it is also possible to obtain its reduced image by reducing the data before DCT by using a known technique, for example, decimation. The reduction of the image data is performed after all the data before DCT has been recorded, or in parallel with the acquisition of the data. It is also possible to obtain a reduced image by decompressing a JPEG image obtained by JPEG compression and then reducing the decompressed image data by decimation or the like.

As described above, according to this embodiment, a given number of pixels is achieved by changing the size of image data based on an input image. Therefore, when an image is photographed by a digital camera or a mobile telephone with a camera, the recording of the image can be completed at high speed, irrespective of an image size selected by a user. Accordingly, the waiting time until the next photographing is reduced, leading to the achievement of operation comfort as well as the suppression of power consumption.

### 2. Second Embodiment

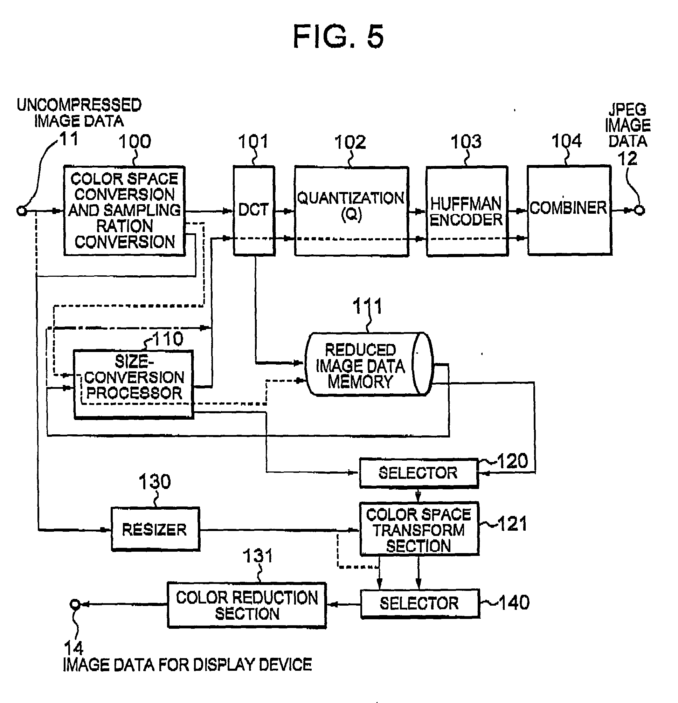

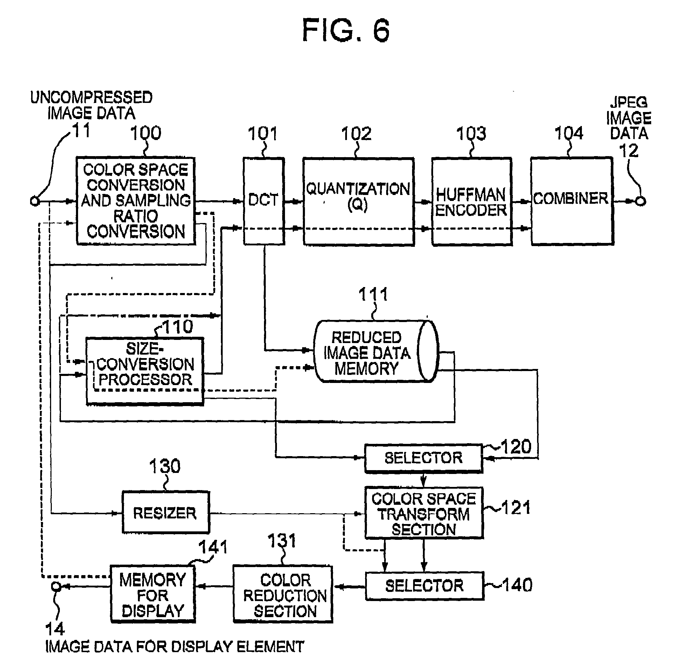

FIG. 5 shows a first example of an image processing device according to a second embodiment of the present invention. Similarly, FIG. 6 shows a second example of the image processing device according to the second embodiment. Note that the same reference numerals and symbols are given to blocks having the same functions as the blocks in FIG. 1 and the description thereof will be omitted.

### 2.1) First Example

In the image processing device according to the second embodiment, cooperation with an image display device is considered. In FIG. 5, a selector 120 selects one of an output of the size-conversion processor 110 and an output of the reduced image data memory 111 and outputs the selected one to'a color space transform section 121. The color space transform section 121 transforms the color space of the selected image data to a color space suitable for the image display device and then outputs the image data to a selector 140. In some cases, input image data 11 or image data from the color space conversion and sampling ratio conversion section 100 is resized by a resizer 130 and then outputted to the selector 140 via, or not via, the color space transform section 121. The selector 140 selects one of the image data inputted from the selector 120 side and the image data inputted from the resizer 130 side. The selected image data is reduced in color by a color reduction section 131 and then outputted as image data 14a for a display device.

The already-described part from block 100 to block 111 for JPEG compression has a color resolution equivalent to 8 bits for each color of R, G, B, while many display devices have a color resolution ranging from 5 to 6 bits for each color, such as RGB565 or RGB666. Therefore, it is required to reduce the number of bits per pixel. This function is called color reduction, and the color reduction section 131 is provided for this function. The color reduction can be implemented by simply truncating less significant bits or by error diffusion processing called dither. The image data 14a reduced in color by the color reduction section 131 is passed on to the display device.

The color space transform section 121 transforms the color space from the YCbCr space to the RGB space. This is because, as described already, although the YCbCr space is used to represent colors in JPEG, a general image display device represents colors using the RGB space. The data subjected to the color space transform is passed on to the color reduction section 131 via the selector 140.

The resizer 130 receives an input of the image data from the image pickup device via the color space conversion and sampling ratio conversion section 100 or by bypassing it and resizes the image data to the number of pixels suitable for image display. By the provision of resizer 130, it is possible, in a preview state, to display an image that is being acquired, without activating the blocks 101 to 104, 110, 111 and 120.

If the color space of the image data outputted from the image pickup device is the YCbCr space, the color space conversion and sampling ratio conversion section 100 can be bypassed. If the color space of the image data outputted from the image pickup device is the RGB space, the color space conversion and sampling ratio conversion section 100 and the color apace transform section 121 are bypassed (indicated by broken lines in FIG. 5).

Image file creation in the second embodiment as shown in FIG. 5 is performed similarly to the first embodiment in FIG. 1. The second embodiment is characterized in that it is possible to create image data for display during a preview prior to image recording, and to rationally provide data for display after the recording operation.

During the preview, the selector 140 is set so as to select the image data inputted from the image pickup device and resized through the resizer 130. After the image is acquired and recorded, the selectors 120 and 140 are set so as to select, as data for display, one of the data stored in the reduced image data memory 111 and the data further resized by the size-conversion processor 110.

Taking as an example the values shown in the example of the first embodiment, the number of pixels of the image stored in the reduced image data memory 111 is proportional to the number of pixels of the image from the image pickup device, while an output from the size-conversion processor 110 during reduced-image creation is of the size of 160 x 120 pixels. Therefore, the selector 120 is set so that a suitable one is selected relatively to the number of pixels of the display device.

If any of the above-mentioned numbers of pixels is too small, the setting of the resizer in the size-conversion processor 110 is changed to a suitable magnifying value after the reduced image is created, and the selectors 120 and 140 are set so that the image data subjected to the resizing is fed to the display device.

In the preview states before and after image recording according to the second embodiment, it is possible to display an image from the image pickup device or an image subjected to the same processing as for the reduced image data to be recorded. That is, immediately after an image is photographed, it is possible to display the reduced image data to be recorded and thus to check its image quality to be recorded.

In the case where JPEG compressed image data having no reduced image data has been recorded in a recording medium, the above-described image processing device is also employed to obtain the similar advantages.

Note that, for the image processing device according to the second embodiment, it is intended to use a device having a display device. An input image can be resized as needed and then sent to the display device (display mode A). Further, color reduction processing can be performed as needed. The color reduction section 131 may be anything supporting simple color reduction, dither, color palette, or the like, or may be anything that can selectively implement or execute these functions.

Moreover, as described above, the display device can display the DCT-DC components that are resized or the DCT-DC components that are not resized (display mode B). In this case, as the image processing device, the following device may be employed: having only a circuit system allowing the display mode A; having only a circuit system allowing the display mode B, or having both the circuit systems each allowing the display modes A and B, which can adaptively switch between them. As an example of the adaptive switching, it is possible to select the display mode A during a preview and switch to the display mode B when recording a photographed image.

In addition, when the number of pixels of a primary image is not large, its reduced image is made by reducing the data before DCT using a decimation technique or the like. The data before DCT may be reduced after all the data is recorded or may be reduced in parallel with the acquisition of the data. Further, a reduced image can be made also by decompressing a JPEG compressed image and then reducing the decompressed image data using a decimation technique or the like. Furthermore, it is also possible that the size of data for display is made equal to the number of pixels of the reduced image so as to be used as the source data of the compressed reduced image.

Note that, although the color space represented as YCbCr (or YUV) is used in JPEG compression, most display devices are driven using the three primary colors RGB. An input image may be of RGB in some cases and of YUV in some cases. Additionally, in the case of the device having the display device, the color space transform function is placed at an adequate location. However, since the color space transform of the input image is sometimes required but sometimes not required, the color space transform function is selected when needed. In RGB-YUV transform, the changing of the sampling ratio of the chrominance is made selectable.

With the configuration according to the second embodiment, even for image data that is obtained from the outside and includes no reduced image, it is possible to create, add and display the reduced image in a short time. Therefore, it is possible to inhibit image-browsing time from varying with files. Moreover, reduced images are generally used when images are browsed. Since data for display is created only one time for image data including no reduced image, it is possible to suppress power consumption.

### 2.2) Second Example

Referring to FIG. 6, the blocks 100 to 104, 110, 111, 120, 121, 130, 131, and 140 are substantially the same as the blocks in FIG. 5. Therefore, the same reference numerals and symbols are given to the blocks and the description thereof will be omitted.

In a second example, in contrast to the configuration in FIG. 5, a display memory 141 is additionally provided. This display memory 141 is provided to store data for display and to make the data for display the source data of reduced image data. In many cases, the display memory 141 is provided when a display device has no image memory.

The example shown in FIG. 6 is configured such that the additional function of making the display memory 141 the image source of a reduced image can be selected. In other words, image data stored in the display memory 141 can be stored in the reduced image data memory 111 through the color space conversion and sampling ratio conversion section 100 and, as needed, the size-conversion processor 110.

When this additional function is not used, the processes executed are substantially the same as those of the first example in FIG. 5. When the additional function is selected, it is possible to reduce time and power consumption because the reduced-data creation processes described in the first embodiment are not used at all and the software and hardware involved in these processes are not activated. Accordingly, by using this additional function during a power-saving mode or when remaining battery time is small, it is possible to extend available time without significant impairment of the image recording function.

Note that the above-described operation control of the image processing device according to the second embodiment can be executed by the processor shown in FIG. 2.

### 3. Third Embodiment

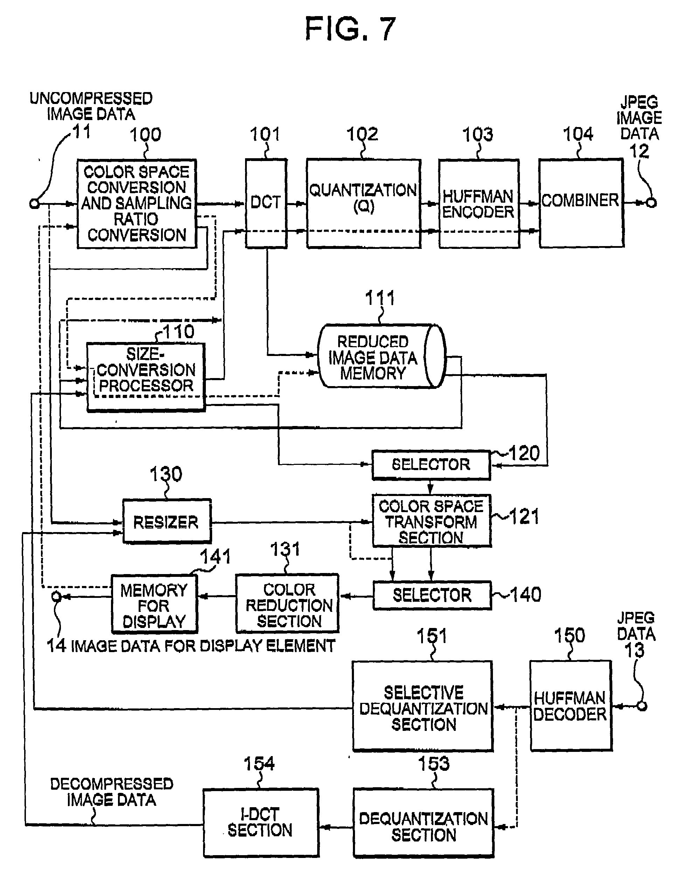

FIG. 7 is a block diagram of an image processing device according to a third embodiment of the present invention. Note that the same reference numerals and symbols are given to blocks that have basically the same functions as the blocks in FIG. 6 and the description thereof will be omitted.

The image processing device according to the third embodiment includes a linkage between the decoding processing on JPEG image data 13 and the creation of a reduced image performed when needed. The JPEG decoding processing is generally used, in which the JPEG data 13 is decompressed to data for display by a Huffman decoder 150, a dequantization section 153 and an inverse-DCT (IDCT) section 154. Note that the Huffman decoder 150 has a function of extracting DC components from a Huffman-decoded DCT matrix and then passing the extracted DC components to a selective dequantization section 151.

The selective dequantization section 151 performs dequantization for DC components obtained by an dequantization processing of the dequantization section 153. The daquantization section 153 uses a quantization table composed of 8 x 8 values, whereas the selective dequantization section 151 uses only one value corresponding to the DC component among the 8 x 8 values. Since separate quantization tables are used for the Y component and Cr, Cb components, a maximum of three types of values are used by the selective dequantization section 151.

In the third embodiment, an image decoding means is additionally provided. Thus, it is made possible to display an image data already recorded and to create and add a reduced image when data externally created does not include any reduced image. Those involved in the image photographing and recording and the image display before and after recording are substantially the same as those of the aforementioned embodiments, and therefore the description thereof will be omitted.

In the case where the display device has a sufficiently large number of pixels and the already-recorded data is displayed, the following operation is performed.
Specifically, in a phase of selecting an image for display, a reduced image included in a record file is decoded by the Huffman decoder 150, dequantization section 153 and IDCT section 154 and resized by the resizer 130 if needed. Then, the resultant data is sent to the display memory 141 to be displayed as described already. When an image-selecting act is made, generally a primary image is similarly decoded and then displayed. When the number of pixels of the display device is not sufficiently large, and/or depending on the application, there is a possibility of an implementation only involving the reduced image-related part and processing or an implementation only dealing with a primary image.

Conventionally, since the processes dealing with a reduced image cannot function, a primary image is directly decoded when image data not including any reduced image data is provided from the outside. In this case, if the number of pixels of the primary image is large, the processing time increases proportionately with the number of pixels.

In such a case, according to this embodiment, a processing path following the blocks 150, 151, 110, 120, 121, 140, 131, and 141 is used for the creation of data for display, not a path following the blocks 150, 153 and 154. With this processing path, data for display can be created in a short time without the dequantization and the IDCT operation being performed by the blocks 153 and 154. Here, the path from the selective dequantization section 151 to the color space transform section 121 does not have to follow the route including the blocks 110 and 120, but may take a route only including the block 130.

However, there are some cases where it is difficult to perform the processing in the Huffman decoder 150 at high speed because the processing time increases proportionately with the number of pixels also in this processing. Therefore, a file with a reduced image may be formed through the following processes as well: creating JPEG-compressed data of a reduced image by allowing image data arriving at the above-described size-conversion processor 110 to pass through the blocks 101 to 103; and combining the JPEG-compressed image data with the JPEG data 13 to be inputted to the Huffman decoder 150 by using the combiner 104.

Although a processing path is not shown in FIG. 7, when primary image is not much larger than the data that is eight times as large as its reduced image in the vertical and horizontal directions, it is preferable to select the path including the IDCT section 154 and the dequantization section 153, not the path including the selective dequantization section 151, for the creation of the reduced image. Moreover, when a primary image is significantly small, there is an alternative of not creating any reduced image.

Incidentally, in addition to the characteristics of the second embodiment, the image processing device according to the third embodiment further has such a characteristic that a compressed image to be stored in an electronic storage medium can be written from the outside. This writing includes writing by communication means, writing on a removable medium by external equipment, and the like.

In a process of reading the compressed image stored on the electronic storage medium (including file content checking) , when no reduced image is included, only DCT-DC components can be extracted after Huffman decoding before dequantization and then dequantized. This data obtained by dequantization becomes a reduced image. Accordingly, it is possible to create a compressed reduced image through the same processing as for DCT-DC components.

Further, the created reduced image and its source image are filed similarly to the first embodiment. Note that, when the number of pixels of the source image is not large, this filing processing is not performed. In addition, when the number of pixels of the source image is not large and the recording processing is not performed thereon, a compressed reduced image is made by decompressing the image, reducing the decompressed image using a decimation technique or the like to obtain a reduced image, and then compressing the reduced image.

Note that, in the image processing device according to the third embodiment as well, the above-described operation control can be executed by the processor shown in FIG. 2.

Furthermore, the image processing device according to any of the first to third embodiments described above can be applied to a mobile telephone equipped with a camera. The application of the present invention to a mobile telephone equipped with a camera makes it possible to instantaneously display a variety of image inputs. Accordingly, it is possible to further expand the multifunctianality of mobile telephones.

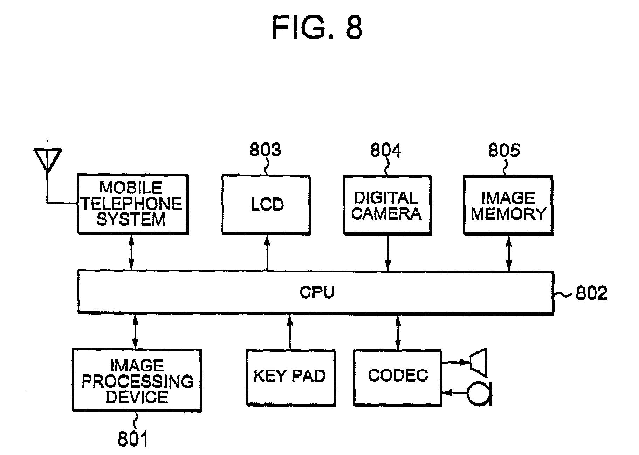

FIG. 8 illustrates a mobile telephone equipped with a camera including an image processing device 801 according to the present invention. For the image processing device 801, one of the devices according to the second and third embodiments shown in FIGS. 5 to 7 is preferably used. However, it should be noted that the image processing device 801 provided to the mobile telephone operates under the control of a CPU 802 in the mobile telephone.

Referring to FIG. 8, the mobile telephone is provided with an LCD 803 serving as a display device, a digital camera 804 serving as an image pickup device, and an image memory 805. Image data picked up by the digital camera 804 is processed by the image processing device 801 according to the present invention as described above. Thus, the image data can instantaneously be displayed on the LCD 803 and also recorded on the image memory 805 together with its reduced image. By including reduced images, it becomes easy to browse recorded images.

The present invention can be applied to equipment, such as a digital camera and a mobile telephone equipped with a camera, which has a function of photographing and recording an image as a primary function or a subfunction and which has a reduced image in image record information. In addition, the present invention can also be applied to those applications intended to provide convenience for an act of browsing recorded images by including reduced images.

## Claims

1. An image processing device for creating compressed image data from uncompressed image data of an input image, **characterized by** comprising:
a converter (110, 101, 111) for converting a number of pixels of the input image to a predetermined number of pixels of a reduced image to be obtained by reducing the input image in size;
a compression section (101-104) for compressing image data to produce compressed image data; and
a controller (112) controlling such that the compression section compresses the uncompressed image data of the input image and reduced image data of the reduced image to output compressed image data of the input image and the reduced image.

2. The image processing device according to claim 1, wherein the converter comprises an image memory (111) for storing an image to be converted to the predetermined number of pixels of the reduced image,
wherein the controller selects one of the reduced image and an intermediate image as a stored image to store it into the image memory, depending on the number of pixels of the input image and its aspect ratio, wherein the intermediate image is a reduced image that is intermediately obtained in a compression process of the input image.

3. The image processing device according to claim 2, wherein the compression process performed by the compression section conforms to JPEG (Joint Photographic Experts Group) format,
wherein the compression section comprises:
a DCT section (101) for performing DCT (discrete cosine transform) of image data to be compressed, to produce DCT components;
a quantizer (102) for quantizing the DCT components to produce quantized DCT components;
an encoder (103) for encoding the quantized DCT components according to entropy encoding to produce compressed image data; and
a combiner (104) for combining compressed image data of the input image and compressed image data of the reduced image into a file of the compressed image data of the input image and the reduced image.

4. The image processing device according to claim 3, wherein the file of the compressed image data of the input image and the reduced image is recorded into a recording medium.

5. The image processing device according to claim 3, wherein the intermediate image to be stored in the image memory comprises DC components of the DCT components.

6. The image processing device according to claim 3, further comprising:
an input converter (100) for converting the input image into a color space and a sampling ratio suitable for JPEG compression to selectively output converted input image to the converter and the compression section.

7. The image processing device according to claim 3, wherein the converter further comprises:
a resizer (110a) for resizing a selected one of the input image and the stored image of the image memory into a predetermined size of the reduced image.

8. The image processing device according to claim 3, wherein the converter further comprises:
a sampling ratio converter (110b) for converting a selected one of the input image and the stored image of the image memory into a predetermined sampling ratio suitable for JPEG compression.

9. The image processing device according to claim 3, wherein the converter further comprises:
a filling section (110c) for filling a missing area where no pixels exist to make an aspect ratio of the reduced image match that of the input image, wherein the missing area is generated when the input image and the reduced image have different aspect ratios.

10. The image processing device according to claim 9, wherein the converter crops a peripheral portion of the input image in its vertical and horizontal directions by suitably adjusting a scaling factor without activating the filling section.

11. The image processing device according to claim 3, wherein when an aspect ratio of the input image is equal to that of the reduced image and the number of the input image is substantially smaller than a predetermined reference value, the controller selects the reduced image obtained by resizing the input image to store it into the image memory.

12. The image processing device according to claim 3, wherein when an aspect ratio of the input image is equal to that of the reduced image and the number of the input image is a little smaller than a predetermined reference value, the controller selects the DC components of the DCT components as the intermediate image to store it into the image memory, wherein the DC components of the intermediate image are outputted to the compression section after converting the intermediate image to the predetermined number of pixels.

13. The image processing device according to claim 3, wherein when an aspect ratio of the input image is equal to that of the reduced image and the number of the input image is not smaller than a predetermined reference value, the controller selects the DC components of the DCT components as the intermediate image to store it into the image memory,
wherein the DC components of the intermediate image are outputted to the compression section without converting the intermediate image.

14. The image processing device according to claim 3, further comprising:
a resizer (130) for resizing the input image to a resized image;
a selector (120, 140) for selecting one of the image data stored in the image memory, image data converted by the converter from the image data stored in the image memory, and image data of the resized image;
an adjuster (121, 131) for adjusting image data selected by the selector to produce display-suitable image data; and
a display for displaying display-suitable image data.

15. The image processing device according to claim 14, wherein the adjuster comprises a color reduction section (131) for reducing in color of the selected image data.

16. The image processing device according to claim 15, wherein the color reduction section supports one of simple color reduction, dither and color pallet.

17. The image processing device according to claim 14, wherein the adjuster comprises a display memory (141) for storing the display-suitable image data, which is further used as source data of the reduced image.

18. The image processing device according to claim 14, further comprising:
an input section for inputting compressed image data from outside;
a decompression section (150, 153, 154) for decompressing the compressed image data inputted from outside to output a decompressed image to the resizer so as to display it.

19. The image processing device according to claim 18, wherein the decompression section comprises:
an entropy decoder (150) for decoding the compressed image data inputted from outside to produce DCT components;
a dequantizer (153) for dequantizing the DCT components to produce dequantized DCT components, and
an inverse DCT section (154) for performing inverse-DCT of the dequantized DCT components to produce the decompressed image.

20. The image processing device according to claim 19, further comprising:
a selective dequantizer (151) for dequantizing DC components of the DCT components obtained by the entropy decoder to output dequantized DC components to the converter so as to produce a reduced image of the decompressed image.

21. A portable communication device equipped with a digital camera (804), comprising the image processing device (801) according to any of claims 1-20, wherein the digital camera outputs the input image.

22. An image processing method for creating compressed image data from uncompressed image data of an input image, **characterized by** comprising:
converting a number of pixels of the input image to a predetermined number of pixels of a reduced image to be obtained by reducing the input image in size;
compressing the uncompressed image data of the input image and reduced image data of the reduced image; and
outputting compressed image data of the input image and the reduced image.

23. The image processing method according to claim 22, wherein the converting step comprises:
storing an image to be converted to the predetermined number of pixels of the reduced image into a image memory; and
selecting one of the reduced image and an intermediate image as a stored image to store it into the image memory, depending on the number of pixels of the input image and its aspect ratio, wherein the intermediate image is a reduced image that is intermediately obtained in a compression process of the input image.

24. The image processing method according to claim 23, wherein the compression process performed conforms to JPEG (Joint Photographic Experts Group) format,
wherein the compressing step comprises:
performing DCT (discrete cosine transform) of image data to be compressed, to produce DCT components;
quantizing the DCT components to produce quantized DCT components;
encoding the quantized DCT components according to entropy encoding to produce compressed image data; and
combining compressed image data of the input image and compressed image data of the reduced image into a file of the compressed image data of the input image and the reduced image.

25. The image processing method according to claim 23, wherein when an aspect ratio of the input image is equal to that of the reduced image and the number of the input image is substantially smaller than a predetermined reference value, the reduced image obtained by resizing the input image is selected to store it into the image memory.

26. The image processing method according to claim 23, wherein when an aspect ratio of the input image is equal to that of the reduced image and the number of the input image is a little smaller than a predetermined reference value, the DC components of the DCT components is selected as the intermediate image to store it into the image memory,
wherein the DC components of the intermediate image are compressed after converting the intermediate image to the predetermined number of pixels.

27. The image processing method according to claim 23, wherein when an aspect ratio of the input image is equal to that of the reduced image and the number of the input image is not smaller than a predetermined reference value, the DC components of the DCT components is selected as the intermediate image to store it into the image memory,
wherein the DC components of the intermediate image are compressed without converting the intermediate image.

28. A program product comprising a computer-readable program for creating compressed image data from uncompressed image data of an input image, the program comprising the steps of:
converting a number of pixels of the input image to a predetermined number of pixels of a reduced image to be obtained by reducing the input image in size;
compressing the uncompressed image data of the input image and reduced image data of the reduced image; and
outputting compressed image data of the input image and the reduced image.

29. The program product according to claim 28, wherein the converting step comprises:
storing an image to be converted to the predetermined number of pixels of the reduced image into a image memory; and
selecting one of the reduced image and an intermediate image as a stored image to store it into the image memory, depending on the number of pixels of the input image and its aspect ratio, wherein the intermediate image is a reduced image that is intermediately obtained in a compression process of the input image.

30. The program product according to claim 29, wherein the compression process performed conforms to JPEG (Joint Photographic Experts Group) format,
wherein the compressing step comprises:
performing DCT (discrete cosine transform) of image data to be compressed, to produce DCT components;
quantizing the DCT components to produce quantized DCT components;
encoding the quantized DCT components according to entropy encoding to produce compressed image data; and
combining compressed image data of the input image and compressed image data of the reduced image into a file of the compressed image data of the input image and the reduced image.
